# EUROPEAN PATENT APPLICATION

(11) **EP 3 336 339 A1**
(43) Date of publication of application: **20.06.2018**
(21) Application number: 16204339.2
(22) Date of filing: 15.12.2016
(51) Int. Cl.: F02D 41/40, F02D 19/06, F02D 41/00, F02B 7/08

(54) **CONTROLLING A DUAL-FUEL INTERNAL COMBUSTION ENGINE OPERATED AT LEAST PARTLY ON GASEOUS FUEL**

(71) Applicant: Caterpillar Motoren GmbH & Co. KG, 24159 Kiel (DE)
(72) Inventor: Sixel, Eike Joachim, 24109 Kiel (DE); Graumüller, Robert, 24103 Kiel (DE); Wolfgramm, Marius, 24116 Kiel (DE)
(74) Representative: Kramer Barske Schmidtchen Patentanwälte PartG mbB

(57) **Abstract**

A method of controlling a dual-fuel internal combustion engine (100, 200) operating at least partly on gaseous fuel is disclosed. The method comprises providing (710) a mixture of gaseous fuel and air to a cylinder (9) of the dual-fuel internal combustion engine (100, 200); injecting (720) a first amount (310) of a high reactivity fuel to the mixture of gaseous fuel and air for creating a reactive combustion mixture of gaseous fuel, air and the first amount (310) of high reactivity fuel, the first amount (310) of high reactivity fuel being provided during a first period (320) of the compression stroke when the internal energy of the reactive combustion mixture is insufficient for being self-ignited; and injecting a second amount (360) of high reactivity fuel during a later, second period (350) close to top dead center (TDC) of a piston (84) of the cylinder (9), wherein the second period (350) is selected such that the second amount (360) of high reactivity fuel is first self-ignited to produce an ignition flame and then the reactive combustion mixture is ignited by the ignition flame.

## Description

### Technical Field

The present disclosure relates to a reciprocating internal combustion engine operating at least partly on gaseous fuel as well as a method of controlling the same. More particularly, the present disclosure relates to igniting a mixture of gaseous fuel and air in a dual-fuel internal combustion engine.

### Background

Dual-fuel internal combustion engines operating at least partly on gaseous fuel typically use, for example, natural gas or bio-gas as an energy source for combustion. These gaseous fuels are less reactive than, for example, liquid fuels. As a result, it may be difficult to reliably and reproducibly ignite a mixture of gaseous fuel and air in certain operating conditions and at different ambient conditions of the dual-fuel internal combustion engine.

The present disclosure is directed, at least in part, to improving or overcoming one or more aspects of prior systems.

### Summary of the Disclosure

According to one aspect, a method of controlling a dual-fuel internal combustion engine operating at least partly on gaseous fuel is disclosed. The method comprises providing a mixture of gaseous fuel and air to a cylinder of the dual-fuel internal combustion engine; injecting a first amount of a high reactivity fuel to the mixture of gaseous fuel and air for creating a reactive combustion mixture of gaseous fuel, air and the first amount of high reactivity fuel, the first amount of high reactivity fuel being provided during a first period of the compression stroke when the internal energy of the reactive combustion mixture is insufficient for being self-ignited. The method further comprises injecting a second amount of high reactivity fuel during a later, second period close to top dead center of a piston of the cylinder. The second period is selected such that the second amount of high reactivity fuel is first self-ignited to produce an ignition flame and then the reactive combustion mixture is ignited by the ignition flame.

According to another aspect, a dual-fuel internal combustion engine operating at least partly on gaseous fuel is disclosed. The dual-fuel internal combustion engine comprises a cylinder, an inlet channel configured to provide charge air to the cylinder, a gaseous fuel admission valve configured to provide gaseous fuel to the cylinder, an ignition fuel injector configured to provide high reactivity fuel to the cylinder, and a control unit connected to the inlet channel, the gaseous fuel admission valve and the fuel injector, wherein the control unit is configured to perform the method as exemplarily disclosed herein.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 shows a schematic drawing of an exemplary internal combustion engine operable at least partly on gaseous fuel;
Fig. 2 shows a schematic cross-sectional view of a cylinder of a dual-fuel (DF) internal combustion engine;
Fig. 3 shows an exemplary section of a schematic temperature or pressure trace during a combustion cycle of a DF internal combustion engine with multiple injections of high reactivity fuel during a first period and a later, second period;
Fig. 4 shows an exemplary map of a desired start of injection of the high reactivity fuel during the second period as a function of the temperature and the pressure of gaseous fuel and air admitted to a cylinder of a DF internal combustion engine;
Fig. 5 shows an exemplary schematic graph of a shifted desired start of injection of the high reactivity fuel as a function of the reactivity of the high reactivity fuel; and
Fig. 6 shows an exemplary schematic flow diagram of an exemplary procedure for controlling an internal combustion engine.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure is based in part on the realization that a mixture of gaseous fuel and air may be difficult to be reliably and reproducibly ignited due to the fact that the gaseous fuel is a low reactivity fuel compared to, for example liquid Diesel fuels.

The present disclosure is further based in part on the realization that a reactivity of the mixture of gaseous fuel and air may be increased by injecting a first amount of high reactivity fuel such as Diesel early in the compression stroke, i.e. close to bottom dead center of the piston, for creating a reactive combustion mixture.

The present disclosure is further based in part on the realization that by injecting a second amount of high reactivity fuel such as Diesel at a later, second period close to top dead center of the piston may have the effect of a conventional, self-ignited Diesel combustion. The reason is that the temperature and the pressure in the combustion chamber close to the top dead center is high.

Within the meaning of this disclosure the term "close to top dead center" relates to a period during the combustion cycle which is such that the internal energy of the injected second amount of high reactivity fuel is sufficient for being self-ignited. In other words, the injected second amount of high reactivity fuel is subjected to a temperature and/or a pressure within the cylinder that is sufficient to directly ignite the second amount of high reactivity fuel.

The present disclosure is further based in part on the realization that the self-ignited Diesel fuel creates an ignition flame which can then be used to ignite the reactive combustion mixture.

The present disclosure is further based in part on the realization that suitable start of injection times for the second amount of high reactivity fuel are determined based on a reactivity of the high reactivity fuel and on a temperature and/or pressure of the gaseous fuel and the air admitted to the cylinder of the dual-fuel (DF) internal combustion engine.

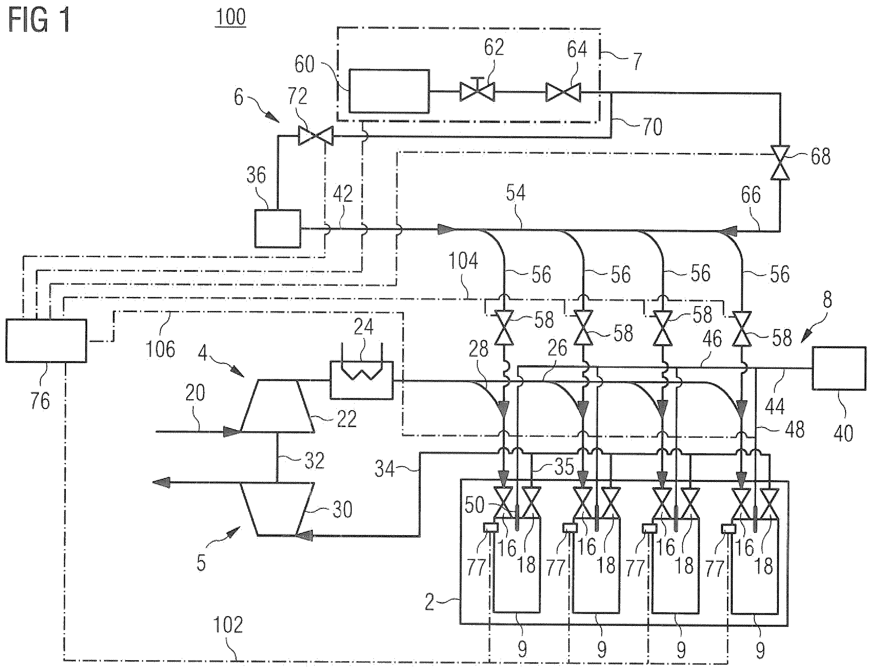

A DF internal combustion engine operable at least partly on gaseous fuel, and an exemplary procedure for controlling the same are described in connection with Figs. 1, 2 and 3 to 6, respectively.

Fig. 1 shows schematically an exemplary reciprocating DF internal combustion engine 100 operating at least partly on gaseous fuel.

Internal combustion engine 100 comprises an engine block 2, a charge air system 4, an exhaust gas system 5, a gaseous fuel system 6 including a purge gas system 7 and/or a liquid fuel system 8. Internal combustion engine 100 can be powered with a liquid fuel such as, for example, diesel fuel in a liquid fuel mode (LFM), and with a gaseous fuel such as natural gas provided, for example, by an LNG-system, in a gaseous fuel mode (GFM).

Engine block 2 comprises a plurality of cylinders. Exemplarily, four cylinders 9 are depicted in Fig. 1. Engine block 2 may be of any size, with any number of cylinders, such as 6, 8, 12, 16 or 20, and in any configuration, for example, "V", in-line or radial configuration.

Each cylinder 9 is equipped with at least one inlet valve 16 and at least one outlet valve 18. Inlet valves 16 are fluidly connected to charge air system 4 and configured to provide charge air, or a mixture of charge air and gaseous fuel into cylinders 9. Outlet valves 18 are fluidly connected to exhaust gas system 5 and configured to direct exhaust gas out of respective cylinder 9.

Charge air is provided by charge air system 4 including an air intake 20, a compressor 22 to charge air, and a charge air cooler 24. A charge air manifold 26 is fluidly connected downstream of charge air cooler 24 and guides charge air via cylinder specific inlet channels 28 into respective cylinders 9.

Exhaust gas system 5 includes an exhaust gas turbine 30 connected to compressor 22 via shaft 32 and an exhaust gas manifold 34 guiding exhaust gas from individual exhaust gas outlet channels 35 to exhaust gas turbine 30.

Charge air system 4 may comprise one or more charge air manifolds 26. Similarly, exhaust gas system 5 may comprise one or more exhaust gas manifolds 34.

In addition, inlet valves 16 and outlet valves 18 may be installed within inlet channels 28 and outlet channels 35, respectively. Inlet channels 28 as well as outlet channels 35 may be provided within a common cylinder head or individual cylinder heads covering cylinders 9.

Gaseous fuel system 6 comprises a gaseous fuel source 36 connected to gaseous fuel piping 42. Gaseous fuel source 36 constitutes a gaseous fuel feed for supplying gaseous fuel for combustion in GFM. For example, gaseous fuel source 36 comprises a gas valve unit and a gaseous fuel tank that contains natural gas or another suitable gaseous fuel in a pressurized state.

Gas valve unit is configured to allow, to block and to control a flow of gaseous fuel from gaseous fuel tank into gaseous fuel piping 42. The gas valve unit may comprise gaseous fuel control valves, gaseous fuel shut-off valves and venting valves.

Gaseous fuel piping 42 is fluidly connected to a gaseous fuel manifold 54 which splits into a plurality of gaseous fuel channels 56. Each gaseous fuel channel 56 is fluidly connected to one of the plurality of inlet channels 28. To dose gaseous fuel into individual inlet channels 28, in each gaseous fuel channel 56, a gaseous fuel admission valve 58 is installed. In some embodiments, DF internal combustion engine 100 may comprise more than one gaseous fuel manifold 54.

Each gaseous fuel admission valve 58 is configured to allow or to block a flow of gaseous fuel into an individual inlet channel 28 to mix with compressed charge air from charge air system 4 in GFM. Thus, cylinder specific mixing zones downstream of each gaseous fuel admission valve 58 are generated. For example, gaseous fuel admission valves 58 may be solenoid actuated plate valves in which springs hold a lower surface of a movable disk against an upper surface of a stationary disk or plate, the two surfaces being configured to provide a sealed relationship in a closed state of gaseous fuel admission valve 58. Each gaseous fuel admission valve 58 may be mounted to a cylinder head covering at least one cylinder 9.

Purge gas system 7 (indicated in Fig. 1 by a dashed dotted box) comprises a purge gas tank 60, a purge gas control valve 62, and a purge gas shut-off valve 64 connected in series. Purge gas tank 60 constitutes a purge gas source to flush gaseous fuel piping 42, gaseous fuel manifold 54, etc. with a purge gas, such as nitrogen in a pressurized state.

Purge gas system 7 may be fluidly connected to gaseous fuel system 6 at various locations. For example, in Fig. 1 a first connection 66 is disposed proximal to the gaseous fuel manifold 54. A second connection 70 is disposed proximal to gaseous fuel source 36. First shut-off valve 68 and second shut-off valve 72 can block or allow a flow of purge gas through first connection 66 and second connection 70, respectively. Additional connections may be integrated in gas valve unit of gaseous fuel source 36.

As previously mentioned, Fig. 1 illustrates a DF internal combustion engine. In a DF internal combustion engine, liquid fuel system 8 comprises a liquid fuel tank 40 connected to liquid fuel piping 44. Liquid fuel tank 40 may comprise a first liquid fuel tank for storing a first liquid fuel, for example, heavy fuel oil (HFO), and a second liquid fuel tank for storing a second liquid fuel, for example, Diesel fuel. Liquid fuel tank 40 constitutes a liquid fuel source for supplying liquid fuel for combustion in LFM. Additionally, liquid fuel tank 40 may constitute a liquid fuel source for supplying ignition fuel in GFM. Of course, other or additional ignition fuel tanks (not shown) may be used as a fuel source for supplying ignition fuel to DF internal combustion engine when operated in GFM.

Liquid fuel piping 44 is fluidly connected to a liquid fuel manifold 46 which splits into a plurality of liquid fuel inlet channels 48. To dose liquid fuel into the combustion chamber of cylinder 9, in each liquid fuel inlet channel 48 a fuel injection system 50 is installed.

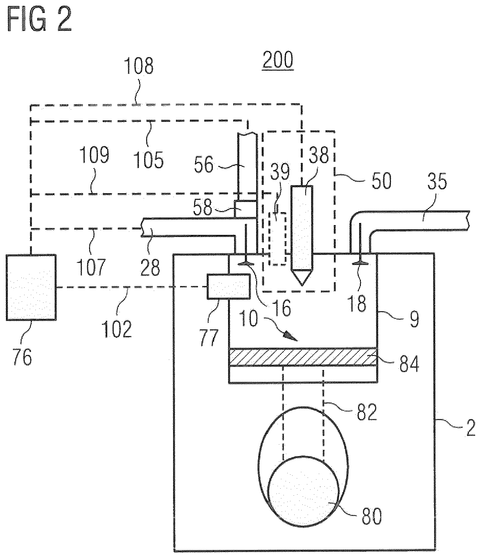

An exemplary embodiment of fuel injection system 50 for DF internal combustion engine 100 is described in more detail when referring to Fig. 2.

As shown in Fig. 1, internal combustion engine 100 may further comprise a plurality of pressure sensors 77 mounted at each cylinder 9. Each pressure sensor 77 is configured to generate a signal corresponding to a temporal development of an internal cylinder pressure during the operation of the engine, for example, during combustion.

To control operation of internal combustion engine 100, a control unit 76 is provided. Control unit 76 forms part of a control system of the engine. Control unit 76 may be configured to receive data of pressure sensor 77 via a readout connection line 102. Control unit 76 may further be configured to control various components of internal combustion engine 100 such as gaseous fuel admission valves 58 via a control connection line 104 and fuel injection system 50 via a control connection line 106. Control unit 76 may further be configured to control valves of purge gas system 7. Alternatively, a second control unit (not shown) may be configured to control the operation of internal combustion engine 100. Further description of the control system and additional control lines between control unit 76 and other components of the engine, such as the fuel injection system 50, will be given in Fig. 2.

Control unit 76 may further be connected to other sensors not shown in Fig. 1, such as temperature sensors for measuring the temperature of the gaseous fuel, the air and the liquid or ignition fuel admitted to cylinder 9, pressure sensors for measuring the pressure of the gaseous fuel, the air and the liquid or ignition fuel admitted to cylinder 9, engine load sensors, engine speed sensors, ambient temperature sensors, NOx-sensors, reactivity sensor for the gaseous fuel and the liquid or ignition fuel such as cetane number sensors or methane number sensors, as well as fuel-to-air ratio sensors provided for each individual cylinder or for a plurality of cylinders. Control unit 76 may also be connected to an operator panel (not shown) for issuing a warning to the operator, indicating a failure of the engine or the like.

Fig. 2 shows a cylinder 9 of a DF internal combustion engine 200 which is an exemplary embodiment of the DF internal combustion engine 100 of Fig. 1. Elements already described in connection with Fig. 1 have the same reference numerals, such as engine block 2, control unit 76, pressure sensor 77, and cylinder 9.

Cylinder 9 includes at least one combustion chamber 10 for combusting a mixture of gaseous fuel and air, a piston 84 and a crankshaft 80 which is drivingly connected to piston 84 via a piston rod 82. Piston 84 is configured to reciprocate within cylinder 9 for performing, amongst other things, a compression stroke to compress the mixture of gaseous fuel and air admitted to cylinder 9 during a combustion cycle of internal combustion engine 100.

Cylinder 9 is connected to charge air manifold 26 via inlet channel 28 and to exhaust gas manifold 34 via outlet channel 35 (see Fig. 1). Inlet valve 16 is disposed in inlet channel 28, and outlet valve 18 is disposed in outlet channel 35. Gaseous fuel admission valve 58 can supply gaseous fuel to combustion chamber 10 of cylinder 9.

Fig. 2 further illustrates fuel injection system 50 by a dashed box. Fuel injection system 50 includes a main fuel injector 38 and an ignition fuel injector 39.

When DF internal combustion engine 200 is operated in LFM, fuel injection system 50 is used to inject liquid fuel into combustion chamber 10 using main fuel injector 38, the liquid fuel being the sole source of energy. When DF internal combustion engine 200 is operated in GFM, fuel injection system 50 is used to inject a pilot amount of liquid fuel into combustion chamber 10 using ignition fuel injector 39 to ignite the mixture of gaseous fuel and air. In GFM, fuel injection system 50 may therefore function as a gaseous fuel ignition system.

Ignition fuel injector 39 is configured to inject a high reactivity fuel so that the mixture of gaseous fuel and air can be ignited in cylinder 9. Examples for high reactivity fuels are Diesel, Propane, Butane, or Hydrogen. If Diesel as high reactivity fuel is used, ignition fuel injector 39 may be connected to liquid fuel tank 40. In embodiments where no Diesel but other high reactivity fuels are injected into cylinder 9, ignition fuel injector 39 may be connected to additional ignition fuel tanks providing the high reactivity fuel.

Cylinder 9 may further comprise pressure sensor 77 to measure a temporal development of an internal cylinder pressure during the operation of the engine, for example, during combustion. Pressure sensor 77 may be a capacitive pressure sensor, an electromagnetic pressure sensor, a piezoelectric pressure sensor, an optical pressure sensor or any other pressure sensor known in the art. Pressure sensor 77 may be mounted at any location of cylinder 9 convenient for measuring the cylinder pressure during combustion. For example, pressure sensor 77 may be mounted within a cylinder side wall or at the cylinder head face. Pressure sensor 77 may reach at least partly into combustion chamber 10 of cylinder 9, for example through a bore in a cylinder side wall.

Pressure sensor 77 may further be disposed outside of the combustion chamber 10 to detect the cylinder pressure indirectly. For example, pressure sensor 77 may be mounted at an existing component of the engine, such as a bolt head, spark plug boss, etc. Pressure sensor 77 may sense stress of that component during combustion, the stress corresponding to the internal cylinder pressure during combustion.

DF internal combustion engine 200 additionally comprises a control system including control unit 76. Control unit 76 is connected to main fuel injector 38 via control connection line 108 and to ignition fuel injector 39 via control connection line 109. Control unit 76 is further connected to temperature and pressure sensors (not shown) provided in inlet channels 28 via readout connection line 107 for measuring the temperature and the pressure of the air admitted to cylinder 9. Control unit 76 is further connected to temperature and pressure sensors (not shown) provided in gaseous fuel channels 56 via readout connection line 105 for measuring the temperature and the pressure of the gaseous fuel admitted to cylinder 9. In addition, control unit 76 may be connected to the high reactivity fuel tanks (not shown) for measuring the temperature, the pressure and the reactivity of the high reactivity fuel injected via ignition fuel injector 39. The reactivity of the high reactivity fuel may be measured based on any suitable reactivity parameter such as the Methane Number, the Octane Number, the Cetane Number and so forth.

In general, control unit 76 as disclosed in connection with Figs. 1 and 2 may be a single microprocessor or multiple microprocessors that include means for controlling, among others, an operation of various components of DF internal combustion engine 200. Control unit 76 may be a general engine control unit (ECU) capable of controlling numerous functions associated with DF internal combustion engine 200 and/or its associated components. Control unit 76 may include all components required to run an application such as, for example, a memory, a secondary storage device, and a processor such as a central processing unit or any other means known in the art for controlling DF internal combustion engine 200 and its components. Various other known circuits may be associated with control unit 76, including power supply circuitry, signal conditioning circuitry, communication circuitry and other appropriate circuitry.

Control unit 76 may analyze and compare received and stored data and, based on instructions and data stored in memory or input by a user, determine whether action is required. For example, control unit 76 may receive temperature and pressure data pressure data from readout lines 105 and 107, determine a reactivity based on a reactivity parameter of the high reactivity fuel, compare the received data with predetermined data stored in the memory such as nominal reactivity data and, based on the results of the comparison, transmit signals to one or more components of the engine, for example ignition fuel injector 39, to alter the operation of the same and thus DF internal combustion engine 200.

### Industrial Applicability

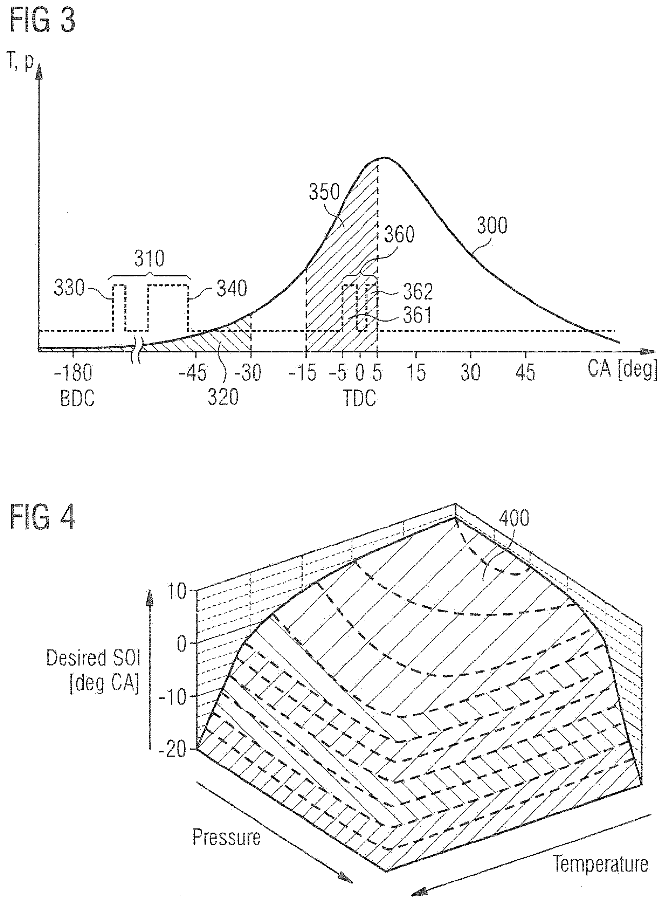

In the following, control procedures for DF internal combustion engines - such as DF internal combustion engines 100, 200 of Figs. 1 and 2 - are described in connection with Figs. 3 to 6.

Exemplary DF internal combustion engines suited to the disclosed control procedure are, for example, DF internal combustion engines of the series M46DF, M34DF and M27DF manufactured by Caterpillar Motoren GmbH & Co. KG, Kiel, Germany. Respective DF internal combustion engines may be operated at 450 - 1500 rpm and may be applied, for example, in medium speed power generator sets, a propulsion system and/or compressor or pump drives. One skilled in the art will, however, appreciate that the disclosed control procedures may also be adapted to suit other internal combustion engines.

Fig. 3 shows a section of a temperature or pressure trace 300 during a single combustion cycle of DF internal combustion engine 100, 200. Temperature or pressure trace 300 is shown schematically for the purpose of explaining the principle of the present control procedure. Thus, other temperature or pressure traces may be conceivable as well. Temperature or pressure trace 300 is further plotted as a function of crank angle (measured in degree), wherein 0 degrees crank angle (CA) corresponds to top dead center (TDC) and -180 degrees CA corresponds to bottom dead center (BDC) of piston 84.

As mentioned, a mixture of gaseous fuel and air is provided or admitted to cylinder 9 for the purpose of combusting the same. During a movement of piston 84 from BDC to TDC (the compression stroke), the mixture is compressed. As a result, the temperature and the pressure of the mixture increases and a maximum temperature or a maximum pressure is attained shortly after TDC, as can be seen in Fig. 3.

As the gaseous fuel is, however, a low reactivity fuel, even with piston 84 being at TDC, the mixture of gaseous fuel and air may not ignite without additional ignition energy. Thus, to increase the reactivity of the mixture and to promote an ignition tendency of the mixture of gaseous fuel and air, a first amount 310 of a more reactive fuel (also called a high reactivity fuel) such as Diesel is injected into the mixture of gaseous fuel and air after or at BDC. As the high reactivity fuel is injected after or at BDC, during the upward movement of piston 84, the first amount 310 of high reactivity fuel gets mixed with the mixture of gaseous fuel and air. As a result, a reactive combustion mixture of gaseous fuel, air and the injected first amount 310 of high reactivity fuel is created.

The injection of the first amount 310 of high reactivity fuel is performed during a first period 320 of the compression stroke. First period 320 is between about BDC and about 30 degrees CA before TDC, more preferably between about BDC and about 40 degrees CA before TDC. In the first period 320, the temperature and the pressure of the mixture of gaseous fuel and air is low, as can be seen in Fig. 3. Thus, an injection of the first amount 310 of high reactivity fuel may not lead to an ignition of the mixture of gaseous fuel and air (despite the increased reactivity due to the first amount 310 of high reactivity fuel). In other words, the first period 320 of the compression stroke is selected such that the inner energy of the mixture of gaseous fuel, air and the injected first amount 310 of high reactivity fuel is insufficient for igniting the mixture of gaseous fuel, air and the injected first amount 310 of high reactivity fuel.

The first amount 310 of high reactivity fuel may be injected using multiples injections during the first period 320. As shown, a first portion 330 of the first amount 310 of high reactivity fuel may be injected in a first injection 330, and a second portion 340 of the first amount 310 of high reactivity fuel may be injected in a second injection 340. Of course, more than two injections are conceivable.

Control unit 76 may have stored first period 320, first amount 310 and, if necessary, first portion 330 and second portion 340 on its memory.

As can be seen in Fig. 3, during a second period 350 after the first period 320, a second amount 360 of high reactivity fuel is injected into cylinder 9. The second period 350 is selected such that, upon injecting the second amount 360 of high reactivity fuel, the internal energy of the second amount 360 of high reactivity fuel is sufficient for being self-ignited. The second period 350 is a period close to TDC where the injected second amount 360 of high reactivity fuel is subjected to a temperature and/or a pressure within cylinder 9 that is sufficient to cause a self-ignition of the second amount 360 of high reactivity fuel. As a result of the self-ignition, the second amount 360 of high reactivity fuel produces an ignition flame which then ignites the reactive combustion mixture of gaseous fuel, air and the first amount 310 of high reactivity fuel. In other words, if Diesel is used a high reactivity fuel, the second amount 360 of Diesel is subjected to a Diesel combustion and, as a result, the ignition flame is a burning Diesel flame which then ignites the reactive combustion mixture of gaseous fuel, air and the first amount 310 of Diesel.

Second period 350 is in a range between about 15 degrees CA before TDC and about 5 degrees CA after TDC. More preferably, second period 350 is in a range between about 10 degrees CA before TDC and about 0 degrees CA before TDC. Even more preferably, second period 350 is in a range between about 5 degrees CA before TDC and about 1 degree CA before TDC.

The advantage of injecting the second amount 360 of high reactivity fuel shortly after TDC is that, as can be seen in Fig. 3, the temperature and/or pressure within cylinder 9 is higher shortly after TDC than at TDC due to mass inertia within cylinder 9. Hence, if the second amount 360 is injected shortly after TDC, the second amount 360 of high reactivity fuel may be self-ignited more easily.

As can be further seen in Fig. 3, the second amount 360 of high reactivity fuel may be injected into cylinder 9 during the second period 350 using multiple injections.

As exemplarily shown in Fig. 3, a first portion 361 of the second amount 360 of high reactivity fuel may be injected during a first injection 361, and a second portion 362 of the second amount 360 of high reactivity fuel may be injected during a second injection 362. Of course, more than two injections are conceivable. As can be also seen, in Fig. 3, first injection 361 may be performed before TDC and second injection 362 may be performed after TDC. By performing a first injection before TDC and a second injection after TDC, the likelihood of achieving a self-ignition of the second amount 360 of high reactivity fuel increases because temperatures and/or pressures shortly after TDC are higher than before TDC, as can be seen in Fig. 3.

The temperature and/or the pressure within cylinder 9 may be lower for the same crank angle during the combustion cycle, if the gaseous fuel and air admitted to cylinder 9 have, for example, a lower temperature and/or pressure. Thus, if the second amount 360 of high reactivity fuel were injected at a fixed crank angle close to TDC, the second amount 360 of higher activity fuel would not necessarily always be subjected to sufficiently high temperatures and/or pressures for being self-ignited.

Thus, to ensure that the second amount 360 of high reactivity fuel is injected at temperatures and pressures sufficient for self-igniting the second amount 360 of high reactivity fuel, a map of desired start of injection (SOI) values as a function of the temperature and/or the pressure of the gaseous fuel and the air admitted to cylinder 9 is provided on the memory of control unit 76.

One example of such a map 400 is depicted in Fig. 4. As can be seen, a desired start of injection SOI (given in degrees crank angle) changes with pressure and/or temperature of the gaseous fuel and/or air admitted to cylinder 9. For example, if the pressure and/or the temperature of the gaseous fuel and/or air is lower, for example because the pressure and/or the temperature of charge air is lower, an injection of the second amount 360 of the high reactivity fuel needs to be such that the second amount 360 of high reactivity fuel is subjected to a higher temperature and/or pressure within cylinder 9. As a consequence, the desired SOI (given in degrees crank angle) increases in Fig. 4 with decreasing temperatures and/or pressures of the gaseous fuel and/or air admitted to cylinder 9.

In addition, also the reactivity of the high reactivity fuel may change. For example, if the high reactivity fuel is Diesel, the composition and thus the quality of the Diesel fuel may change. Also, other high reactivity fuels that are even more reactive than Diesel may be used, such as Hydrogen.

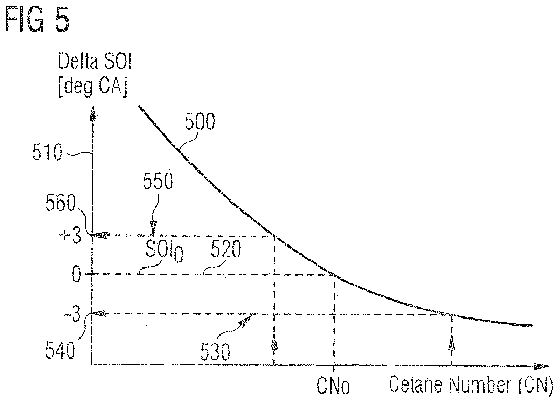

To account for changes in the reactivity of the high reactivity fuel, the second period 350 not only depends on the temperature and/or the pressure of the gaseous fuel and air, but also on the reactivity of the high reactivity fuel. Exemplarily, Fig. 5 shows a schematic graph 500 of a shifted desired start of injection of the high reactivity fuel as a function of the reactivity of the high reactivity fuel.

In Fig. 5, the shifted desired start of injection of the high reactivity fuel is shown as a function of the Cetane Number (CN). The Cetane Number is the inverse function of a fuel's ignition delay. Thus, if the Cetane Number increases, the ignition delay reduces thereby indicating a more reactive fuel.

As can be seen in Fig. 5, start of injection shift values 510 are plotted as a function of increasing Cetane Numbers. Start of injection shift values 510 indicate a shift of the start of injection of the high reactivity fuel with respect to a nominal start of injection SOI₀ 520 for a nominal reactivity (nominal Cetane Number CNo) of the high reactivity fuel. More specifically, if the reactivity of the high reactivity fuel is higher than the nominal reactivity, i.e. if the Cetane Number is larger than CNo, the start of injection is shifted away from TDC. This is exemplarily shown by graph 530 which illustrates a shift of the nominal start of injection 520 by an injection shift value 540 of -3 degrees CA. Thus, if map 400 would, for example, provide a nominal start of injection 520 of, for example, 5 degrees CA before TDC, i.e. -5 degrees CA, the shifted nominal start of injection would be 8 degrees CA before TDC, i.e. -8 degrees CA. If, on the other hand, the reactivity of the high reactivity fuel is lower than the nominal reactivity, i.e. if the Cetane Number is smaller than CNo, the start of injection is shifted towards TDC. This is exemplarily shown by graph 550 which illustrates a shift of the nominal start of injection 520 by an injection shift value 560 of +3 degrees CA. Thus, if map 400 would, for example, provide a nominal start of injection 520 of, for example, 5 degrees CA before TDC, i.e. -5 degrees CA, the shifted nominal start of injection would be 2 degrees CA before TDC, i.e. -2 degrees CA.

Control unit 76 may have stored a start of injection shift map similar to schematic graph 500 on its memory to account for a change of reactivity of the high reactivity fuel.

In case the shifted nominal start of injection would result in a value given in degrees CA after TDC which exceeds a predetermined threshold value, control unit 76 chooses the predetermined threshold value as the shifted nominal start of injection to ensure that the second amount 360 of high reactivity fuel is subjected to a sufficiently high temperature and/or pressure within cylinder 9. A predetermined threshold value of a shifted nominal start of injection may be, for example, 10 degrees after TDC, preferably 5 degrees after TDC.

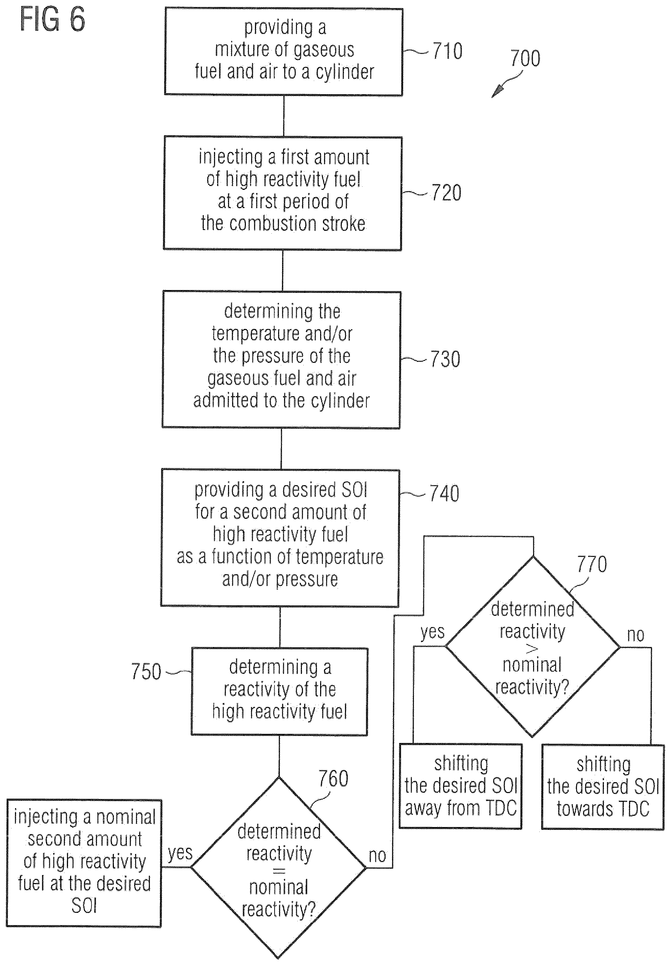

Fig. 6 shows a schematic flow diagram 700 of an exemplary procedure for controlling DF internal combustion engine 200. At a first step 710, a mixture of gaseous fuel and air is provided to cylinder 9.

At a second step 720, the first amount 310 of high reactivity fuel during the first period 320 of the compression stroke is injected into cylinder 9 of DF internal combustion engine. In some embodiments, multiple injections of high reactivity fuel are performed which together include the first amount 310 of high reactivity fuel.

At a third step 730, a temperature and/or a pressure of the gaseous fuel and the air admitted to cylinder 9 is determined. For this, control unit 76 receives a data from the temperature and pressure sensors of the gaseous fuel channels 56 and the inlet channels 28 via readout connection lines 105 and 107, respectively.

At a fourth step 740, control unit 76 then compares the determined temperature and/or pressure of the gaseous fuel and the air admitted to cylinder 9 with the temperatures and/or pressures provided in map 400. Control unit 76 then selects from map 400 a desired start of injection that corresponds to the temperature and/or pressure closest to the determined temperature and/or pressure.

At a fifth step 750, control unit 76 determines the reactivity of the high reactivity fuel, for example by determining a Cetane Number of the high reactivity fuel.

At a sixth step 760, control unit 76 compares the determined reactivity of the high reactivity fuel with a nominal reactivity stored on its memory. If the comparison reveals that the determined reactivity is equal to the nominal reactivity, control unit 76 sends control tasks to ignition fuel injector 39 for injecting a second amount 360 of high reactivity fuel at the desired start of injection determined in step 740. A nominal value of the second amount 360 to be injected is stored on the memory of control unit 76.

If, however, the comparison at step 760 reveals that the determined reactivity is not equal to the nominal reactivity of the high reactivity fuel, control unit 76 proceeds to step 770 where control unit 76 checks whether the determined reactivity is larger than the nominal reactivity of the high reactivity fuel.

If at step 770 the determined reactivity is higher than the nominal reactivity, control unit 76 shifts the desired start of injection away from TDC.

If, however, step 770 reveals that the determined reactivity is lower than the nominal reactivity of the high reactivity fuel, control unit 76 shifts the desired start of injection towards TDC.

Map 400 and injection shift map (graph 500) may be predetermined based on experimental data obtained from DF internal combustion engine 100, 200 during measurements on, for example, a test bed, or using simulations of DF internal combustion engine 100, 200.

The term "nominal" in connection with a value or a reactivity refers to a predetermined set value or a predetermined reactivity which are set, for example, by the manufacturer of DF internal combustion engine 100, 200.

The herein disclosed procedure allows a reliable and reproducible ignition of a mixture of gaseous fuel and air by injecting a first amount of high reactivity fuel close to BDC for creating a reactive combustion mixture, and a second amount of high reactivity fuel close to TDC. The second injection is performed at temperatures and/or pressures close to TDC which are sufficient for self-igniting the second amount of high reactivity fuel. The self-ignited second amount of high reactivity fuel is then used as an ignition flame to ignite the reactive combustion mixture of gaseous fuel, air and the first amount of high reactivity fuel.

Moreover, a desired start of injection of the second amount of high reactivity fuel is chosen in dependence of the temperature and/or pressure of the gaseous fuel and the air admitted to the cylinder as well as in dependence of a reactivity of the high reactivity fuel to ensure that the second injection is performed in a period of the combustion cycle where an internal energy of the injected second amount of high reactivity fuel is sufficient for being self-ignited.

The above procedure allows an easy control of the combustion of a mixture of gaseous fuel and air over a wide operating range and at different possible ambient conditions, i.e. under varying fuel qualities of the low and high reactivity fuel, low to high charge air and gaseous fuel temperatures and varying pressures of charge air or gaseous fuel.

Although the preferred embodiments of this invention have been described herein, improvements and modifications may be incorporated without departing from the scope of the following claims.

Terms such as "about", "around", "approximately", or "substantially" as used herein when referring to a measurable value such as a parameter, an amount, a temporal duration, and the like, is meant to encompass variations of ±10% or less, preferably ±5% or less, more preferably ±1% or less, and still more preferably ±0.1% or less of and from the specified value, insofar as such variations are appropriate to perform in the disclosed invention. It is to be understood that the value to which the modifier "about" refers is itself also specifically, and preferably, disclosed. The recitation of numerical ranges by endpoints includes all numbers and fractions subsumed within the respective ranges, as well as the recited endpoints.

## Claims

1. A method of controlling a dual-fuel internal combustion engine (100, 200) operating at least partly on gaseous fuel, the method comprising:
providing (710) a mixture of gaseous fuel and air to a cylinder (9) of the dual-fuel internal combustion engine (100, 200);
injecting (720) a first amount (310) of a high reactivity fuel to the mixture of gaseous fuel and air for creating a reactive combustion mixture of gaseous fuel, air and the first amount (310) of high reactivity fuel, the first amount (310) of high reactivity fuel being provided during a first period (320) of the compression stroke when the internal energy of the reactive combustion mixture is insufficient for being self-ignited; and
injecting a second amount (360) of high reactivity fuel during a later, second period (350) close to top dead center (TDC) of a piston (84) of the cylinder (9), wherein the second period (350) is selected such that the second amount (360) of high reactivity fuel is first self-ignited to produce an ignition flame and then the reactive combustion mixture is ignited by the ignition flame.

2. The method according to claims 1 or 2, wherein the second amount (350) of high reactivity fuel is provided between about 15 degrees crank angle (CA) before top dead center (TDC) and about 5 degrees crank angle (CA) after top dead center (TDC), more preferably between about 10 degrees crank angle (CA) before top dead center (TDC) and about 0 degrees angle (CA) before top dead center (TDC), more preferably between about 5 degrees crank angle (CA) before top dead center (TDC) and about 1 degree crank angle (CA) before top dead center (TDC).

3. The method according to claim 1, wherein the first amount (310) of high reactivity fuel is provided between about 180 degrees crank angle (CA) before top dead center (TDC) and about 30 degrees crank angle (CA) before top dead center (TDC).

4. The method according to any one of the preceding claims, wherein the first amount (310) of high reactivity fuel is provided in multiple injections (330, 340).

5. The method according to any one of the preceding claims, wherein the second amount (360) of high reactivity fuel is provided in multiple injections.

6. The method according to claim 5, wherein a first injection (361) is performed before top dead center (TDC) and a second injection is performed after top dead center (TDC).

7. The method according to any one of the preceding claims, wherein the second period (350) depends on the temperature and/or the pressure of the gaseous fuel and the air admitted to the cylinder (9).

8. The method according to any one of the preceding claims, wherein the second period (350) is selected from a predetermined map (400).

9. The method according to claim 8, wherein the predetermined map (400) depends on the temperature and/or the pressure of the gaseous fuel and the air admitted to the cylinder (9).

10. The method according to claim 9, wherein the predetermined map (400) includes a desired start of injection of the second amount (360) of high reactivity fuel as a function of the temperature and/or the pressure of the gaseous fuel and the air admitted to the cylinder (9), and the method further comprises:
determining (730) the temperature and/or the pressure of the gaseous fuel and the air admitted to the cylinder (9);
comparing the determined temperature and/or pressure with the temperatures and/or pressures provided in the map (400);
selecting from the map (400) a desired start of injection that corresponds to the temperature and/or pressure closest to the determined temperature and/or pressure; and
providing the second amount (360) of high reactivity fuel at the selected desired start of injection.

11. The method according to any one of the preceding claims, wherein the second period (350) depends on a reactivity of the high reactivity fuel.

12. The method according to any one of the preceding claims, wherein providing the second amount (360) of high reactivity fuel further comprises:
providing a nominal start of injection (SOI₀) of the second amount (360) of high reactivity fuel in dependence of a nominal reactivity (CNo) of the high reactivity fuel;
determining (750) the reactivity of the high reactivity fuel;
comparing the nominal reactivity (CNo) with the determined reactivity; and
shifting the start of injection towards top dead center (TDC), if the determined reactivity is lower than the nominal reactivity (CNo), or
shifting the start of injection away from top dead center (TDC), if the determined reactivity is higher than the nominal reactivity (CNo).

13. The method according to claim 12, wherein shifting the start of injection further comprises:
providing a start of injection shift map (500) with start of injection shift values (510) as a function of the reactivity of the high reactivity fuel;
comparing the determined reactivity with the reactivities provided in the start of injection shift map (500);
selecting from the start of injection shift map (500) a start of injection shift value (540, 560) that corresponds to the reactivity closest to the determined reactivity;
adding the start of injection shift value (540, 560) to the nominal start of injection (SOI₀); and
providing the second amount (360) of high reactivity fuel at the shifted nominal start of injection.

14. The method according to any one of the preceding claims, wherein the high reactivity fuel is selected from the group comprising Diesel, Propane, Butane and Hydrogen.

15. A dual-fuel internal combustion engine (100) operating at least partly on gaseous fuel, comprising:
a cylinder (9);
an inlet channel (28) configured to provide charge air to the cylinder (9);
a gaseous fuel admission valve (58) configured to provide gaseous fuel to the cylinder (9);
an ignition fuel injector (39) configured to provide high reactivity fuel to the cylinder (9); and
a control unit (76) connected to the inlet channel (28), the gaseous fuel admission valve (58) and the ignition fuel injector (39), wherein the control unit (76) is configured to perform the method according to any one of the preceding claims.
